# EUROPÄISCHE PATENTANMELDUNG

(11) **EP 1 085 732 A2**
(43) Veröffentlichungstag der Anmeldung: **21.03.2001**
(21) Anmeldenummer: 00119575.9
(22) Anmeldetag: 07.09.2000
(51) Int. Cl.: H04M 3/42, H04M 7/00, H04M 3/533

(54) **Verfahren und Anordnung für einen Rundsendedienst**

(30) Priorität: 17.09.1999 DE 19944736
(71) Anmelder: SIEMENS AKTIENGESELLSCHAFT, 80333 München (DE)
(72) Erfinder: Kopetzky, Peter, 82008 Unterhaching (DE)

(57) **Zusammenfassung**

Die Erfindung betrifft ein Verfahren zum Betrieb eines Rundsendedienstes mit einem Absender und einer vorbestimmten Mehrzahl von Empfängern (KE:A, KE:B) bzw. Dienstnutzern, welche insbesondere in Interaktion mit dem Absender treten können, wobei die Kommunikation zwischen dem Absender und den Empfängern mindestens abschnittsweise in einem intelligenten Netz abläuft.

## Beschreibung

Die Erfindung betrifft ein Verfahren zum Betrieb eines Rundsendedienstes mit beschränkter Empfängergruppe, der insbesondere den Empfängern die Möglichkeit zu einer Interaktion mit dem Anbieter gibt, sowie eine Anordnung zur Realisierung eines solchen Rundsendedienstes.

Rundsendedienste mit Interaktionsmöglichkeit werden heute - als spezielle Realisierung der bekannten Call-Center - als sogenannte 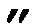 Outbound"-Call-Center normalerweise mit Bedienpersonal verwirklicht, das einen bestimmten Empfängerkreis anruft, ihm eine Information gibt oder ein Angebot unterbreitet und die Reaktion auf die Information bzw. das Angebot festhält. In diesem Rahmen kann auch die Bezahlung von Waren per Durchgabe einer Kreditkarten- oder Kundenkartennummer und zumindest eine mündliche Bestätigung der Transaktion erfolgen.

Diese Realisierung ist infolge des persönlichen Ansprechens durchaus angenehm für die Empfänger, aber in vielen Anwendungen aufgrund der hohen Personalkosten unwirtschaftlich und für spezielle Einsatzfälle, wo es auf die Absetzung einer Information an eine große Anzahl von Empfängern in kurzer Zeit ankommt, gar nicht praktikabel.

Eine andere Realisierungsmöglichkeit besteht im Einsatz bestimmter Endgeräte oder Nebenstellenanlagen, bei denen der Wählvorgang durch das sogenannte 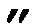 Power-Dialling" oder 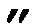 Predictive-Dialling" automatisiert sein kann und durch eine Fax- oder Sprachverteilerfunktion auch die Ausgabe einer vorbestimmten Information an die angerufenen Empfänger selbsttätig steuerbar ist. Derartige Endgeräte sind für Rundsendeaktionen oder Interaktionsmöglichkeiten vielfach ausreichend. Die Sammlung und Konsolidierung von Rückmeldungen der Empfänger (Dienstnutzer) und gegebenenfalls die Bearbeitung des Zahlungsvorganges selbst - einschließlich der Übermittlung einer Quittung an den Käufer - werden manuell bearbeitet, wodurch Rundsendeaktionen mit Interaktionsmöglichkeit auch bei rundsendefähigen Endgeräten noch einen relativ hohen Personal- und Personalkostenaufwand erfordern.

Speziell für kleinere Betriebe, bei denen relativ selten Rundsendeaktionen anfallen, aber auch für Betriebe, die bei Rundsendeaktionen in kurzer Zeit eine große Anzahl von Teilnehmern ansprechen und in Interaktion mit diesen treten müssen, gibt es daher derzeit keine vollständig befriedigende technische Lösung.

Der Erfindung liegt daher die Aufgabe zugrunde, ein verbessertes Verfahren zum Betrieb eines Rundsendedienstes und eine entsprechende verbesserte Anordnung anzugeben, die insbesondere auf verschiedene Anwendungsfälle flexibel anpaßbar und kostengünstig realisierbar sind.

Diese Aufgabe wird hinsichtlich ihres Verfahrensaspektes durch ein Verfahren mit den Merkmalen des Anspruches 1 und hinsichtlich ihres Anordnungsaspektes durch eine Anordnung mit den Merkmalen des Anspruches 5 gelöst.

Die Erfindung schließt den grundlegenden Gedanken ein, die Durchführung von Rundsendeaktionen mit Interaktionsmöglichkeit auf der Grundlage eines intelligenten Netzes vollständig zu automatisieren, ohne daß der Anbieter über ein spezielles Endgerät verfügen muß.

Sie eröffnet insbesondere die Möglichkeit, umfangreiche Rundsendeaktionen mit Interaktionsmöglichkeit in relativ kurzer Zeit auszuführen, was beispielsweise bei zeitlich begrenzten Verkaufsaktionen (etwa bei einem Last-Minute-Veranstaltungskartenverkauf kurz vor Beginn einer Veranstaltung) von hohem wirtschaftlichem Wert ist. Sie eröffnet weiterhin auch kleinen Betrieben die Möglichkeit, bei den Betreibern des Rundsendedienstes flexibel, kurzfristig und zu geringen Kosten bestimmte Rundsendeaktionen in Auftrag zu geben, ohne irgendwelche eigenen Kapazitäten hierfür vorhalten zu müssen. Die vorgeschlagene Lösung hat auch für die Dienstnutzer erhebliche Vorteile; hierzu sei nur auf die Möglichkeit hingewiesen, von kurzfristigen günstigen Angeboten eines Anbieters zuverlässig Kenntnis zu erlangen und diese schnell und hinsichtlich der Zahlungsmöglichkeiten flexibel zu nutzen.

Die Übermittlung der Nachrichten an den vorbestimmten Empfängerkreis erfolgt vorteilhafter Weise über quasi-gleichzeitige Punkt-zu-Punkt-Verbindungen oder eine Punkt-zu-Mehrpunkt-Verbindung (Multicast), sie kann aber grundsätzlich auch durch das sogenannte Polling (nacheinander aufgebaute Punkt-zu-Punkt-Verbindungen) oder in Mischformen der genannten Übermittlungsarten erfolgen.

Es ist möglich, das vorgeschlagene Verfahren auch ohne Interaktionsmöglichkeit der Dienstnutzer zu betreiben. Beispielsweise können an eine vorbestimmte Anzahl von Endgeräten oder an alle Endgeräte in einer vorbestimmten Netzebene Mitteilungen - als SMS-Cell-Broadcast, Sprachdurchsage oder Fax - gesendet werden. Dies ermöglicht etwa die gezielte Übermittlung von Warnmitteilungen für Verkehrsteilnehmer (Staumeldungen, Unfallmeldungen, Geisterfahrer-Warnungen, Straßenzustandsberichte) oder allgemeinen Warnmitteilungen, zum Beispiel Hochwasser- oder Sturmwarnungen etc.. Auch können öffentliche Aufrufe, beispielsweise zur Verbrechensbekämpfung oder zum Blutspenden, Veranstaltungsansagen (ohne unmittelbare Buchungsmöglichkeit) oder zielgruppenspezifische Werbenachrichten (zum Beispiel Sonderangebote eines Handelsunternehmens, Speisekarten-Hinweise eines Gastronomiebetriebes o. ä.) an ausgewählte Empfänger übermittelt werden. Sinnvoll ist das vorgeschlagene Verfahren auch für die schnelle und kostengünstige Information von Firmenmitarbeitern, Projektmitarbeitern, Vereinsmitgliedern, Aktionären einer Aktiengesellschaft etc. über sie betreffende Vorgänge in ihrer Firma, bei dem Projekt, in dem Verein oder der Aktiengesellschaft o. ä.

Im Zusammenhang mit der letztgenannten Ausführung ist eine spezielle Fortbildung des Verfahrens von Interesse, bei der jeder Empfänger durch das Setzen spezifischer Flags die Übermittlung bestimmter Werbenachrichten an ihn unterbinden kann. In einer vorteilhaften Ausführung werden an den Dienststeuerknoten, der dem Absender (Anbieter) zugeordnet ist, Empfangsquittungen übermittelt, aus denen eine Quittungsliste erstellt und an den Anbieter übermittelt wird. Zweckmäßig ist eine interne Verarbeitung der Empfangsquittungen beim Dienststeuerknoten, die zu einer Erfassung der noch nicht erreichten Empfänger führt und in deren Ergebnis Rufwiederholungen initiiert werden.

In der bevorzugten Ausführung der vorgeschlagenen Lösung, bei der eine Interaktion der Dienstenutzer mit dem Anbieter vorgesehen ist, ist die Absendung einer Nachricht durch die Dienstnutzer an den Anbieter vorgesehen, wobei die einzelnen Nachrichten zeitlich parallel oder sequentiell am Dienststeuerknoten des Netzes verarbeitet und von dort sequentiell an den Anbieter weitergeleitet werden. Die entsprechende Nachricht kann bei Marketing-Rundsendeaktionen insbesondere eine Kennung der betreffenden Rundsendeaktion und die Nutzer-Rufnummer (speziell z. B. über die an sich bekannte "Prompt-and-Collect"-Funktion erfasst) oder auch Kredit- oder Kundenkartendaten umfassen. Für deren Auswertung können spezielle Resourcen am Dienststeuerknoten des Anbieters vorgesehen sein, die auch einen Zugang zu einem IP-Netz zur Verifizierung über Datenverbindungen zu Kreditkartenfirmen etc. umfassen können. Über entsprechende Dienstverwaltungsmittel lassen sich auf diese Weise die mit einer telefonischen Bezahlung einer angebotenen Ware oder Leistung verknüpften Prüfungsvorgänge im System automatisch realisieren. In einer weiteren bevorzugten Ausführung ist die Übermittlung einer weiteren Nachricht seitens des Absenders (Anbieters) nach Erhalt der Rück-Nachricht vom Dienstnutzer vorgesehen. Eine solche Nachricht kann insbesondere eine Kaufbestätigung bzw. -quittung sein und Zahlungsbelegdaten umfassen.

Die vorgeschlagene Anordnung wird bevorzugt im Rahmen eines intelligenten Netzes realisiert, welches über eine entsprechende Schnittstelle mit einem herkömmlichen Kommunikationsnetz - beispielsweise einem Mobilfunknetz - verbunden ist.

Als Endgerät beim Absender dient ein PC, über den die Empfängerliste und der Nachrichten-Text erstellt werden, und die Empfänger-Endgeräte sind insbesondere FernsprechEndgeräte, d. h. herkömmliche Telefone, Faxgeräte und/oder Mobiltelefone o. ä. Über die Anbindung eines Datennetzes mittels einer an sich bekannten Schnittstelle sind auch Datenendgeräte bei den Empfängern in das Rundsende-Procedere einzubeziehen.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
- Figur 1: eine Prinzipskizze einer Anordnung zur Ausführung der Erfindung,
- Figur 2: eine schematische Darstellung zur Erläuterung einer ersten Ausführungsform der Erfindung,
- Figur 3: eine schematische Darstellung zur Erläuterung einer zweiten Ausführungsform der Erfindung und

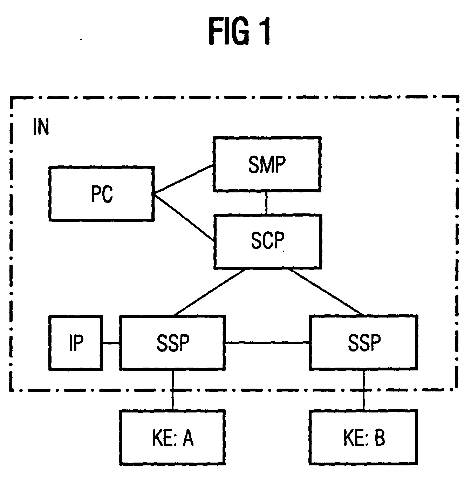

Fig. 1 zeigt den grundsätzlichen Aufbau einer Gesamtanordnung zur Ausführung der Erfindung, bei der an Dienstvermittlungsknoten SSP eines intelligenten Netzes IN zwei Kommunikations-Endgeräte KE:A bzw. KE:B von Empfängern eines Rundsendedienstes angeschlossen sind. Ein Anbieter einer Ware oder Dienstleistung ist über einen Computer PC mit einem Dienstverwaltungsknoten SMP oder mit einem Dienststeuerknoten SCP des intelligenten Netzes IN verbunden. Der Dienststeuerknoten SCP hat auch eine direkte Verbindung zum Dienstverwaltungsknoten SMP und im übrigen Verbindungen zu den beiden Dienstver- mittlungsknoten SSP der Endgeräte KE:A und KE:B. Bei der in der Figur 1 dargestellten Anordnung ist der Dienststeuerungsknoten SSP des Endgerätes KE:A zudem mit einer intelligenten Peripherie IP verbunden.

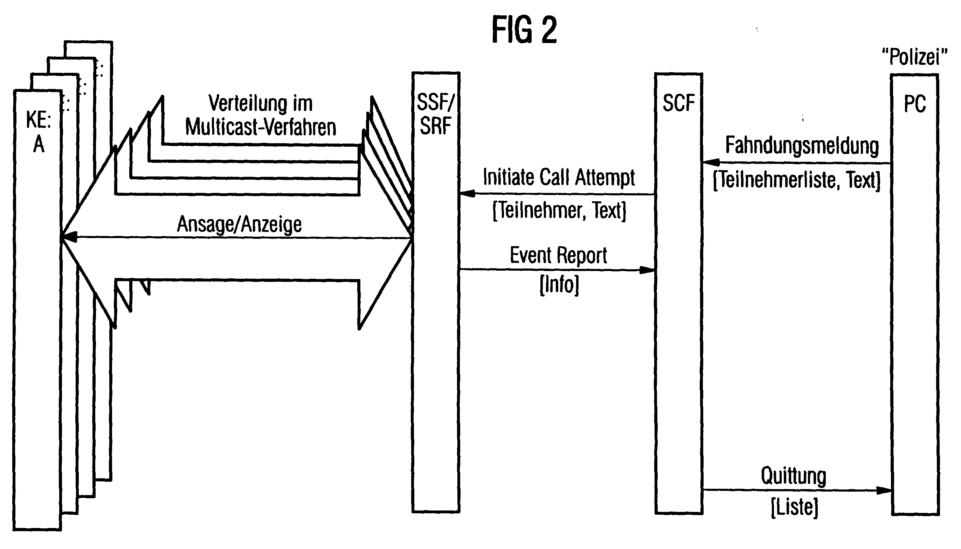

Die Betriebsweise dieser Anordnung wird unter Bezugnahme auf Fig. 2 zunächst in einer ersten Ausführungsform beschrieben:

Ein in Fig. 2 mit 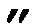 Polizei" gekennzeichneter Dienstleistungsanbieter gibt über einen PC eine Nachricht - hier Fahndungsmeldung - an einen begrenzten Adressatenkreis aus, die eine Teilnehmerliste und einen Text umfaßt. Innerhalb der vom Anbieter des Rundsendedienstes bereitgestellten intelligenten Netzstruktur führt die in die Dienststeuerfunktion (SCF = Service Control Function) eingespeiste Nachricht zur Rufauslösung (Initiate Call Attempt), die durch die Dienstvermittlungs-/Betriebsmittelfunktion SSF/SRF (Service Switching Function/Specialised Resource Function) im Multicast-Verfahren, d. h. zeitlich parallel an die Empfänger des vorbestimmten Empfängerkreises, ausgelöst wird.

Jede erfolgreiche Absetzung eines Rufes an vorbestimmten Empfänger wird durch eine in der Figur als Event Report bezeichnete Empfangsquittung beantwortet. Aus den einzelnen Empfangsquittungen der vorbestimmten Empfänger wird in der Dienststeuerfunktion insgesamt eine Quittung (Liste) erstellt, die an den ursprünglichen Absender (Polizei) übermittelt wird. In diese Funktionalität ist eingeschlossen, daß bei Nichterreichbarkeit eines vorbestimmten Empfängers intern in der Netzstruktur ein entsprechendes Signal gebildet und derart verarbeitet wird, daß nach einem geeigneten zeitlichen Ablaufschema eine Rufwiederholung erfolgt. Die Quittungsliste kann zu einem vorbestimmten Zeitpunkt nach Aussendung der primären Nachricht (Fahndungsmeldung) an deren Absender übermittelt oder von diesem abgefordert werden. Es ist sowohl möglich, nach Übergabe der Liste weitere Rufwiederholungen zu unterbinden - wobei sich in der Quittungsliste der endgültige benachrichtigte Empfängerkreis ausdrücken würde - als auch weitere Rufwiederholungen auszulösen und zu einem späteren Zeitpunkt einen Quittungs-Nachtrag zu erstellen etc..

Es wird noch darauf hingewiesen, daß die Kommunikations-Endgeräte in einem sehr breiten Sinne zu verstehen sind; insbesondere können sie auch durch über einen Dienstvermittlungsknoten an das intelligente Netz angebundene Sub-Netze (etwa eine Nebenstellenanlage oder ein LAN = Local Area Network) gebildet sein. Im hier gewählten Beispiel der Übemittlung einer Fahndungsmeldung kann ein solches Sub-Netz etwa das Intranet einer Behörde sein, für deren Mitarbeiter die Fahndungsmeldung relevant ist.

Nachfolgend wird unter Bezugnahme auf Fig. 2 als bevorzugte Ausführung der Erfindung eine solche erläutert, bei der eine Interaktion zwischen dem Anbieter einer Dienstleistung und den potentiellen Nutzern vorgesehen ist.

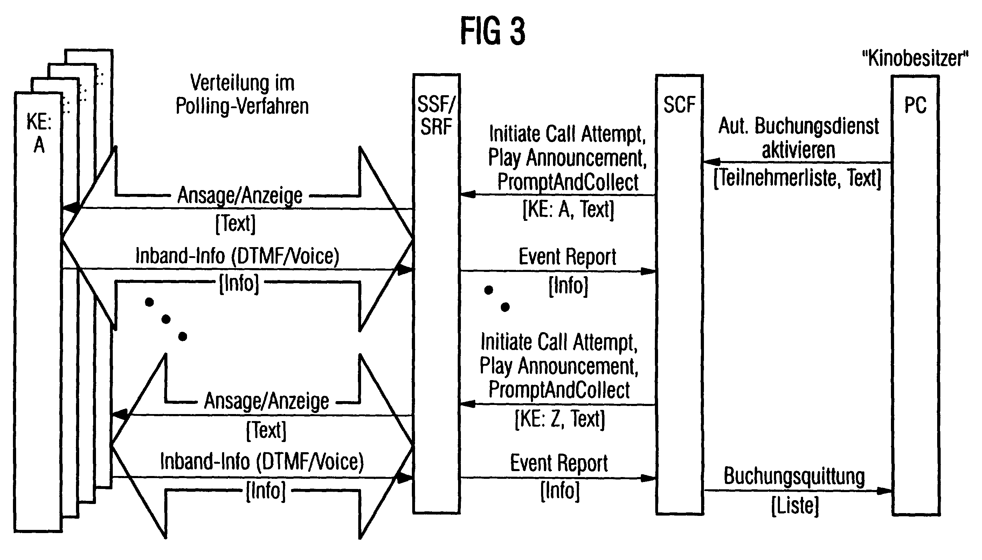

Der hier als 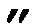 Kinobesitzer" gekennzeichnete Anbieter/Absender aktiviert über seinen PC - auf der Grundlage einer durch den IN-Betreiber vergebenen Lizenz - einen automatischen Buchungsdienst. In diesem Rahmen wird zu einem bestimmten Zeitpunkt vor Beginn einer Vorstellung an einen ausgewählten Kreis von bei dem Kinobesitzer registrierten Kinobesuchern die Information übermittelt, daß für einen bestimmten (über eine Textnachricht beschriebenen Film) zu einer bestimmten Vorstellung noch freie Plätze vorhanden sind. Bei der in Fig. 3 gezeigten Ausführung wird über die Dienststeuerfunktion SCF eine Mehrzahl von Rufen im Polling-Verfahren, d. h. nacheinander im Punkt-zu-Punkt-Verfahren, ausgelöst. An jeden der Teilnehmer wird der entsprechende Text per Ansage über die NF-Stufe und Hörkapsel des jeweiligen Endgerates oder - speziell bei Mobilfunk-Endgeräten - auch per SMS akustisch bzw. optisch ausgegeben.

Der angerufene Empfänger reagiert, wenn er an dem Angebot interessiert ist, über eine in der Figur als 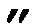 Inband-Info (DTMF/Voice)" gekennzeichnete Rück-Nachricht, in deren Rahmen er, je nach konkreter Ausgestaltung des Dienstes, eine buchungsrelevante Information übermittelt. Die seitens des Anbieters ausgesandte Textnachricht kann beispielsweise lauten 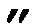 Für den Film xxx im Kino yyy sind für die zzz-Vorstellung noch Restkarten verfügbar. Wählen Sie 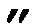 #" und geben Sie die Anzahl der Karten ein, die Sie zum Preis von DM 5,-- kaufen wollen." Drückt der Teilnehmer anschließend auf dem Endgerät die 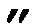 #"-Taste und gibt danach eine Ziffer ein, so wird eine entsprechende Buchungsinformation erstellt, die - zusammen mit der Rufnummer des buchenden Empfängers - über die Dienstvermittlungs-/Betriebsmittelfunktion zunächst zur Dienststeuerfunktion gelangt.

Dort erfolgt einerseits eine Sammlung der entsprechenden Buchungsinformationen und, unter Zugriff auf eine entsprechende Gebühren-Datenbasis, zugleich eine Belastung des Telefonkontos des buchenden Teilnehmers mit dem der Anzahl der bestellten Karten entsprechenden Betrag. Zugleich erfolgt eine interne Registrierung der Anzahl der aus dem verfügbaren Bestand bereits bestellten Karten, so daß die Polling-Aktion abgebrochen werden kann, wenn die verfügbaren Restkarten alle bestellt wurden. Ist dieser Zeitpunkt erreicht, so wird an den Kinobesitzer eine entsprechende 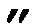 Ausverkauft"-Mitteilung zusammen mit den Telefonnummern und Namen der Kartenbesteller und der Anzahl der durch diese jeweils bestellten (und bezahlten) Karten übermittelt. Die gekauften Kinokarten werden dann an der Abendkasse gegen Nennung des Namens und/oder der Telefonnummer des Bestellers ausgegeben.

Alternativ zur beschriebenen Vorgehensweise ist es auch möglich, das Verfahren ohne telefonische Bezahlung ablaufen zu lassen, indem lediglich Buchungsinformationen verarbeitet werden und die Bezahlung letztlich an der Kinokasse erfolgt. Hierfür ist systemintern ein geringerer Aufwand für die Realisierung der Zahlungsvorgänge erforderlich, allerdings ist auch der Nutzen für den Initiator der Rundsendeaktion (Kinobesitzer) etwas geringer, da bestellte, jedoch nicht abgeholte Karten auch nicht bezahlt werden.

Die Realisierung der vorgeschlagenen Lösung ist zum einen in der Form möglich, daß ein regelmäßiger Veranstalter von Rundsendeaktionen, wie etwa ein großes Warenhaus, ein Versandhaus, ein Verkehrsfunkbetreiber o. ä., selbst als Anbieter agiert. In einer alternativen Ausführung stellt ein Anbieter die Hard- und Software für die Realisierung von Rundsendeaktionen im intelligenten Netz gegen Gebühr bereit und Initiatoren mit geringer Nutzungsfrequenz nehmen diesen Dienst fallweise in Anspruch. Diese Möglichkeit bietet sich beispielsweise für kleinere Vereine, Fachgeschäfte, Gaststätten etc. an.

Als Realisierungsmöglichkeit für den quasi-gleichzeitigen Aufbau einer Mehrzahl von Punkt-zu-Punkt-Verbindungen bieten sich heute eingesetzte Koppelfelder, etwa eine als 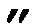 Zeitlagenstufe" zu bezeichnende - an sich bekannte - Zeit-Raum-Vermittlung an.

Die Ausführung der Erfindung ist nicht auf die oben beschriebenen Beispiele beschränkt, sondern auch in einer Vielzahl von Abwandlungen möglich, die im Rahmen fachgemäßen Handelns liegen.

## Patentansprüche

1. Verfahren zum Betrieb eines Rundsendedienstes mit einem Absender (PC) und einer vorbestimmten Mehrzahl von Empfängern (KE:A, KE:B) bzw. Dienstnutzern, welche insbesondere in Interaktion mit dem Absender treten können,
**dadurch gekennzeichnet**, daß
die Kommunikation zwischen dem Absender und den Empfängern mindestens abschnittsweise in einem intelligenten Netz (IN) abläuft, derart, daß der Absender eine erste Nachricht, insbesondere Textnachricht, und eine Empfängerliste an einen Dienststeuerknoten (SCP) übermittelt, bei dem Dienststeuerknoten (SCP) eine Mehrzahl von Rufen an die Empfänger (KE:A, KE:B) gemäß der Empfängerliste generiert und über Dienstvermittlungsknoten (SSP) die Nachricht an die Empfänger zeitlich parallel und/oder sequentiell abgesetzt wird.

2. Verfahren nach Anspruch 1,
**dadurch gekennzeichnet**, daß
über die Dienstvermittlungsknoten (SSP) an den Dienststeuerknoten (SCP) Empfangsquittungen über die Absetzung an die einzelnen Empfänger (KE:A, KE:B) übermittelt werden, aus denen eine Quittungsliste erstellt und an den Absender (PC) übermittelt wird.

3. Verfahren nach Anspruch 1 oder 2,
**dadurch gekennzeichnet**, daß
die Übermittlung einer zweiten Nachricht, insbesondere von Kredit- oder Kundenkartendaten, durch die Dienstnutzer (KE:A, KE:B) an den Absender (PC) nach Erhalt der ersten Nachricht vorgesehen ist, wobei die zweiten Nachrichten zeitlich parallel und/oder sequentiell zum Dienststeuerknoten (SCP) übermittelt und sequentiell an den Absender weitergeleitet werden.

4. Verfahren nach Anspruch 3,
**dadurch gekennzeichnet**, daß
die Übermittlung einer dritten Nachricht, insbesondere von Zahlungsbelegdaten, durch den Absender (PC), insbesondere ausgehend vom Steuerknoten (SCP), nach Erhalt der zweiten Nachricht von einem Dienstnutzer an diesen über den zugeordneten Dienstvermittlungsknoten (SSP) vorgesehen ist.

5. Anordnung für einen Rundsendedienst mit einem AbsenderEndgerät (PC) und einer vorbestimmten Mehrzahl von Empfänger-Endgeräten (KE:A, KE:B), wobei die Empfänger-Endgeräte insbesondere als Sender bezüglich des Absender-Endgerätes wirken können,
**dadurch gekennzeichnet**, daß
das Absender-Endgerät an einen Dienststeuerknoten (SCP) eines intelligenten Netzes (IN) angeschlossen ist und die Empfänger-Endgeräte mindestens mittelbar an den Dienstvermittlungsknoten (SSP) des intelligenten Netzes angeschlossen sind.

6. Anordnung nach Anspruch 5,
**dadurch gekennzeichnet**, daß
das Absender-Endgerät (PC) ein Datenendgerät, insbesondere ein PC oder Server, und die Empfänger-Endgeräte Fernsprech-Endgeräte, insbesondere Festnetz-Telefone und/oder Mobiltelefone und/oder Fax-Geräte, sind.

7. Anordnung nach Anspruch 5 oder 6,
**dadurch gekennzeichnet**, daß
das intelligente Netz (IN) als Mobilfunknetz ausgebildet oder über eine Schnittstelle mit einem solchen verbunden ist, wobei die Empfänger-Endgeräte (KE:A, KE:B) als Mobilfunk-Endgeräte ausgebildet sind.

8. Anordnung nach einem der Ansprüche 5 bis 7,
**dadurch gekennzeichnet**, daß
beim Dienststeuerknoten (SCP) ein Profilspeicher zur Speicherung vorbestimmter Informationsprofile als Filter für die an die einzelnen Empfänger-Endgeräte (KE:A, KE:B) zu übermittelnde Information vorgesehen ist.
